# EUROPÄISCHE PATENTSCHRIFT

(11) **EP 4 313 875 B1**
(45) Veröffentlichungstag und Bekanntmachung des Hinweises auf die Patenterteilung: **14.05.2025**
(21) Anmeldenummer: 23702221.5
(22) Anmeldetag: 18.01.2023
(51) Int. Cl.: C02F 1/34, C02F 1/72, C02F 1/469, C02F 103/08, B01D 1/22, C02F 1/04

(54) **VORRICHTUNG UND VERFAHREN ZUR AUFBEREITUNG VON WASSER**
DEVICE AND METHOD FOR PREPARING WATER
DISPOSITIF ET PROCÉDÉ DE TRAITEMENT DE L'EAU

(30) Priorität: 27.01.2022 DE 102022000308
(43) Veröffentlichungstag der Anmeldung: 07.02.2024
(73) Patentinhaber: Gombert, Bernd, 82237 Wörthsee (DE)
(72) Erfinder: Gombert, Bernd, 82237 Wörthsee (DE)
(74) Vertreter: Castell, Klaus
(86) Internationale Anmeldenummer: PCT/EP2023/025017
(87) Internationale Veröffentlichungsnummer: WO 2023/143862

(56) Entgegenhaltungen:
- DE-A1- 102009 054 487
- US-A- 5 534 118

## Beschreibung

Die Erfindung betrifft eine Vorrichtung gemäß dem Oberbegriff des Patentanspruchs 1 und ein Verfahren zur Aufbereitung von Wasser mit einer derartigen Vorrichtung. Vorrichtungen und Verfahren zur Aufbereitung von Wasser werden genutzt, um Trinkwasser aus nicht trinkbarem Wasser wie etwa Salzwasser oder verschmutztem bzw. mit gesundheits- schädlichen Stoffen belastetem Wasser zu gewinnen.

Bei derartigen Vorrichtungen und Verfahren kann es sich zum Beispiel um Kläranlagen handeln, in denen unter Anwendung von sehr komplexen Aufbereitungsprozessen aus verschmutztem Wasser wieder Trinkwasser gewonnen wird.

Ferner sind Entsalzungsanlagen bekannt, in denen Trinkwasser aus Meerwasser gewonnen wird. Zwei Verfahren haben sich weltweit sehr verbreitet, die zur Bereitstellung des Trinkwassers in diesen Anlagen Anwendung finden, nämlich thermische Verfahren unter Einbeziehung von Destillation und Verdampfung des Meerwassers und Verfahren wie die Umkehrosmose, welche mit Membranen arbeiten. Jedoch erfordern beide Verfahren einen sehr hohen Energieeinsatz, weshalb der Betrieb derartiger Anlagen einerseits wirtschaftlich schwierig und andererseits aus Gründen des Klimaschutzes problematisch ist.

Die US 5 534 118 A beschreibt eine Vorrichtung mit den Merkmalen des Oberbegriffs des Patentanspruchs 1. Die DE 10 2009 054487 A1 beschreibt eine Vorrichtung zum Verdampfen von Wasser.

Es ist eine Aufgabe der Erfindung eine Vorrichtung und ein Verfahren für eine umweltschonende, leicht durchführbare und wirtschaftliche Aufbereitung von nicht trinkbarem Wasser vorzuschlagen.

Die Aufgabe wird gelöst durch eine Vorrichtung mit den Merkmalen des Patentanspruchs 1.

Der drehbare Hohlkörper kann rohrförmig ausgebildet sein. Wird der drehbare Hohlkörper in Rotation versetzt, rotiert der schaufelförmige Separator mit dem drehbaren Hohlkörper mit. Dabei beschleunigt der schaufelförmige Separator das aufzubereitende Wasser. Entsprechend der Beschleunigung wird die Fließgeschwindigkeit, mit der das aufzubereitende Wasser am Separator vorbeifließt, reguliert. Je höher die Geschwindigkeit ist, desto geringer ist der statische Druck des aufzubereitenden Wassers (Gesetz von Bernoulli).

Das aufzubereitende Wasser wird auf eine derart hohe Fließgeschwindigkeit beschleunigt, dass der statische Druck unter den Verdampfungsdruck des aufzubereitenden Wassers fällt. Hierzu kann das aufzubereitende Wasser auf Fließgeschwindigkeiten von 14 Meter pro Sekunde oder schneller durch den schaufelförmigen Separator beschleunigt werden.

Als Folge wird eine Kavitation im Bereich des Separators hervorgerufen, so dass sich Dampfblasen, auch Kavitationsblasen genannt, im aufzubereitenden Wasser ausbilden. Die Dampfblasen werden durch die Strömung in Gebiete höheren Druckes mitgerissen. Mit dem erneuten Ansteigen des statischen Drucks über den Dampfdruck kondensiert der Dampf in den Hohlräumen schlagartig, und die Kavitationsblasen implodieren nach kurzer Zeit. Dadurch entstehen im aufzubereitenden Wasser sehr hohe Druckstöße bzw. Druckwellen. Aufgrund der sich im aufzubereitenden Wasser ausbildenden hohen Drücke dringen die sich an der wasserdampfdurchlässigen Diffusionsschicht des Separators befindlichen Dampfblasen durch die Diffusionsschicht in den drehbaren Hohlkörper ein.

Wird nun der im drehbaren Hohlkörper befindliche Wasserdampf kondensiert, wird reines, aufbereitetes Wasser gewonnen, das mittels des Separators aus dem aufzubereitenden Wasser abgeschieden wird. Der drehbare Hohlkörper dient zugleich als Sammel- bzw. Auffangbehälter für das frisch aufbereitete Wasser.

Der drehbare Hohlkörper kann ein geschlossenes Gehäuse zur Trennung des aufzubereitenden Wassers von dem aufbereiteten Wasser umfassen. So kann verhindert werden, dass das aufbereitete Wasser mit dem aufzubereitenden Wasser in Kontakt gerät oder durch dieses wieder verschmutzt bzw. kontaminiert wird.

Die Vorrichtung zur Aufbereitung des Wassers kann einen äußeren Hohlkörper zur Durchleitung des auf- zubereitenden Wassers umfassen, wobei der drehbare Hohlkörper innerhalb des äußeren Hohlkörpers angeordnet ist. Der äußere Hohlkörper kann rohrförmig ausgebildet sein. Ferner kann der äußere Hohlkörper verhindern, dass das aufzubereitende Wasser aus der Vorrichtung entweicht. Zudem begünstigt der äußere Hohlkörper die Umströmung des Separators mit dem aufzubereitenden Wasser, da das Wasser durch den äußeren Hohlkörper zum Separator gedrängt wird.

Der schaufelförmige Separator kann zumindest eine Propellerschaufel oder eine Turbinenschaufel aufweisen. Wird der Separator in Rotation versetzt, dann kann eine Sogwirkung erzeugt werden, um das aufzubereitende Wasser in Richtung zum Separator hin anzuziehen. Entsprechend der jeweiligen Geometrie der Schaufeln kann die Sogwirkung und damit die Strömung des aufzubereitenden Wassers beeinflusst werden, z. B. hinsichtlich der Geschwindigkeit und der Strömungsrichtung. So kann eine Geometrie für den schaufelförmigen Teil des Separators gewählt werden, die das Hervorrufen der Kavitation im Bereich der wasserdampfdurchlässigen Diffusionsschicht des Separators begünstigt.

Die wasserdampfdurchlässige Diffusionsschicht kann an denjenigen Stellen des schaufelförmigen Separators angeordnet sein, an denen das Auftreten der Kavitation am wahrscheinlichsten ist, wie z. B. an einem radial äußeren Ende des schaufelförmigen Separators. Es können aber auch andere Stellen des Separators mit einer wasserdampfdurchlässigen Diffusionsschicht versehen sein, bzw. der Separator kann vollständig aus einer Diffusionsschicht ausgebildet sein.

Die Diffusionsschicht kann zumindest teilweise ein porenförmiges Material aufweisen. Die Kavitations- blasen können das Porenmaterial passieren. Nachdem die Kavitationsblasen das Porenmaterial durchdrungen haben, schlagen sie sich als winzige Wassertröpfchen im Inneren des Separators nieder.

Das Porenmaterial kann mithilfe additiver Fertigungsverfahren, wie z. B. 3D-Druckverfahren, hergestellt werden. Das Porenmaterial kann auch Kunststoff- oder Metallgewebe umfassen. Das Porenmaterial kann auch ein nanoporöses Material umfassen, zum Beispiel mit Hohlräumen in einer Größe von ca. 5 bis 50 Nanometer.

Das porenförmige Material kann zumindest teilweise als Katalysator ausgebildet sein und zumindest eines der folgenden Katalysatormaterialien aufweisen, wie etwa Aluminium, Silber, Gold, Kobalt, Kupfer, Eisen, Iridium, Molybdän, Nickel, Palladium, Platin, Rhodium, Ruthenium oder Titan. Somit kann das aufzubereitende Wasser zusätzlich chemisch gereinigt bzw. aufbereitet werden. Je nachdem mit welchen Stoffen das aufzubereitende Wasser verunreinigt ist, kann ein passendes Katalysatormaterialausgewählt werden. Um zumindest eines der Katalysatormaterialien als porenförmiges Material auszubilden, kann wiederum ein additives Fertigungsverfahren (z. B. 3D-Druck) oder ein Sinterverfahren zur Anwendung kommen. Es ist auch möglich, die Katalysatormaterialien in Form einer Legierung auf das porenförmige Material aufzubringen. Das porenförmige Material kann auch als Multielement-Material ausgebildet werden. Beispielsweise kann das porenförmige Material ganz oder teilweise aus Keramik bestehen.

Die Poreneigenschaften des porenförmigen Materials können an einen vordefinierten Separationsgrad angepasst sein. Dabei bestimmt der Separationsgrad das Verhältnis von reinem destilliertem Wasser zum anteiligen Salz- oder Brauchwassergehalt.

Die Diffusionsschicht kann zumindest teilweise aus einem Sinterwerkstoff hergestellt sein. Somit kann die Diffusionsschicht mithilfe eines Sinterverfahrens hergestellt werden. Als Sinterwerkstoff können feinkörnige keramische oder metallische Stoffe, auch in Kombination, verwendet werden.

Die Diffusionsschicht kann derart ausgebildet sein, dass sie ein Entweichen von Wasserdampf aus dem drehbaren Hohlkörper verhindert. Beispielsweise kann die Diffusionsschicht derart ausgebildet sein, dass sie ein Druckgefälle begünstigt, das den Wasserdampf in den Separator bzw. den drehbaren Hohlkörper zieht. Die Diffusionsschicht kann auch derart ausgebildet sein, dass sie eine Art Kamineffekterzeugt, die den Wasserdampf in den Separator bzw. den drehbaren Hohlkörper zieht.

Neue Materialien wie z. B. poröser Graphenschaum (auch Aerographen genannt) können ebenso für die Diffusionsschicht verwendet werden. Dieser Graphenschaum kann elektrisch kontrollierbare Druckluftschübe erzeugen, indem das Geflecht aus Graphen-Röhrchen bei Stromzufuhr erhitzt wird. Der in den porösen Graphenschaum eingedrungene Wasserdampf wird explosionsartig ausdehnt. Die so erzeugten zusätzlichen Druck- und Temperaturerhöhungen lassen sich nutzen, um beispielsweise die Kavitation bzw. das Partialdampfdruckgefälle zu unterstützen bzw. zu beschleunigen

Die Vorrichtung zur Aufbereitung von Wasser kann zumindest eine Elektrode zum elektrischen Aufladen des aufzubereitenden Wassers aufweisen.

Eine erste Elektrode kann innerhalb des äußeren Hohlkörpers und eine zweite Elektrode außerhalb des äußeren Hohlkörpers angeordnet sein. Beispielsweise kann der Separator die erste Elektrode umfassen. Der äußere Holkörper kann die zweite Elektrode umfassen. Die zweite Elektrode kann an der Außenwand des äußeren Hohlkörpers angebracht sein. Alternativ kann die zweite Elektrode an der Innenwand des äußeren Hohlkörpers angebracht sein. Die erste Elektrode kann negativ und die zweite Elektrode kann positiv geladen sein. Mithilfe der ersten und zweiten Elektrode kann somit innerhalb des äußeren Hohlkörpers ein elektrisches Spannungsfeld aufgebaut werden, durch welches das aufzubereitende Wasser hindurchfließt. Die elektrische Spannung kann zudem pulsieren, um eine Schock-Elektrodialyse hervorzurufen. Daraufhin können die aufgeladenen Wassertröpfchen abgelenkt werden, so dass die positiv geladenen Ionen von der negativ geladenen Elektrode angezogen werden. Die negativ geladenen Ionen werden zur Gegenseite gedrängt und gelangen somit erst gar nicht zum Separator. Auf diese Weise kann eine elektrolytische Separation realisiert werden, welche in einer Art Messerscheide aus dem aufzubereitenden Wasser einen Strom von aufbereitetem Wasser abzweigt.

Die elektrolytische Separation kann zudem mit der zuvor erläuterten chemischen bzw. katalytischen Separation kombiniert werden, um als Synergieeffekt eine elektrochemische Separation umzusetzen.

Der drehbare Hohlkörper ist mit einem Antrieb zum Hervorrufen von Kavitation im aufzubereitenden Wasser durch Rotation des Separators verbunden. Der Antrieb kann unterschiedlichen Typs sein wie z. B. ein Elektromotor, ein Hydraulikmotor oder eine Verbrennungskraftmaschine.

Die Vorrichtung zur Aufbereitung von Wasser kann einen oder mehrere Sensoren zur Erfassung eines Parameters des aufzubereitenden Wassers aufweisen. Beispielsweise können Druck, Fließgeschwindigkeit und Temperatur des Wassers sowie Lautstärke und Tonlage der Explosionen erfasst werden, wie auch die Drehzahl des Separators. Die Parameter können mit Sollwerten verglichen werden und im Falle einer Abweichung von einem Sollwert entsprechend korrigiert werden. Fällt die Fließgeschwindigkeit des aufzubereitenden Wassers beispielsweise unter einen erlaubten Sollwert, kann der Separator beschleunigt werden, um die Fließgeschwindigkeit zu erhöhen. Die Beschleunigung des Separators kann wiederum an der sich erhöhenden Drehzahl ermittelt werden.

Die Vorrichtung zur Aufbereitung von Wasser weist ein Stellglied zur Förderung von Kavitation im aufzubereitenden Wasser auf. Beispielsweise kann das Stellglied ein Regler für den Antrieb zur Anpassung von Drehzahl und / oder Drehmoment des Antriebs sein. Die Rotationsgeschwindigkeit des drehbaren Hohlkörpers und ein am drehbaren Hohlkörper anliegendes Drehmoment können sensorisch erfasst werden, z. B. durch einen im Antrieb integrierten Drehgeber oder Drehmomentsensor oder durch einen im Wasser oder außerhalb des Förderelementes angeordneten Durchflusssensor. Bei Vorliegen einer Abweichung der Rotationsgeschwindigkeit oder des Drehmoments von einem (variablen) Sollwert passt das Stellglied die Rotationsgeschwindigkeit oder das Drehmoment an den jeweiligen Sollwert an, wobei die Sollwerte auf einen Wert eingestellt sind, bei dem eine Kavitation im aufzubereitenden Wasser zu erwarten ist.

Der drehbare Hohlkörper und der zumindest eine schaufelförmige Separator können als eine Einheit mit Antrieb und Steuerung bzw. Regelung ausgeführt werden.

Die Vorrichtung kann auch als Batterie (Mehrfachsystem) kombiniert werden, indem zumindest zwei Vorrichtungen parallel oder seriell angeordnet wer- den. So können beispielsweise zwei Separatoren in einem gemeinsamen äußeren Hohlkörper angeordnet werden. Werden die Separatoren nacheinander bzw. seriell angeordnet, können sie von einem gemeinsamen Antrieb angetrieben werden. Bei paralleler Anordnung könnten die einzelnen Separatoren über ein Sammelgetriebe miteinander verbunden und dann ebenfalls von einem gemeinsamen Antrieb angetrieben werden.

Die Aufgabe der Erfindung wird zudem gelöst durch ein Verfahren zur Aufbereitung von Wasser, mit den im Patentanspruch 14 angegebenen Schritten.

Somit kann das aufbereitete Wasser von dem aufzubereitenden Wasser separiert werden, indem aus dem aufzubereitendem Wasser Wasserdampf entzogen wird, der in dem drehbaren Hohlkörper wieder zu Wasser umgewandelt wird. Da der Wasserdampf frei von Schmutz oder Schadstoffen ist, verbleiben diese im aufzubereitenden Wasser.

Das Verfahren kann ferner die folgenden Schritte aufweisen: Aufbauen eines elektrischen Feldes im aufzubereitenden Wasser. Wie zuvor erläutert, können zwei Elektroden genutzt werden, um eine elektrische Spannung innerhalb des äußeren Hohlkörpers zu erzeugen. Fließt das aufzubereitende Wasser durch das elektrische Feld, wird es elektrisch aufgeladen und kann elektrolytisch separiert werden.

Das Verfahren kann ferner die folgenden Schritte aufweisen: Bestimmen einer Rotationsgeschwindigkeit des drehbaren Hohlkörpers. Die Rotationsgeschwindigkeit kann durch einen im Antrieb verbauten Drehgeber erfasst werden.

Das Verfahren kann ferner die folgenden Schritte aufweisen: Ausbilden eines Partialdampfdruckgefälles im drehbaren Hohlkörper zur Verhinderung eines Entweichens des Wasserdampfs aus dem drehbaren Hohlkörper.

Weitere Merkmale und Vorteile der Erfindung ergeben sich aus der nachfolgenden Beschreibung von Ausführungsbeispielen unter Bezugnahme auf die beigefügten Figuren. Es zeigen:
Fig. 1 eine schematische Darstellung einer Vorrichtung zur Aufbereitung von Wasser in einer seitlichen Schnittansicht;
Fig. 2 eine vereinfachte schematische Darstellung der Vorrichtung zur Aufbereitung von Wasser in einer frontalen Schnittansicht;
Fig. 3 eine vergrößerte Darstellung eines Teils der Vorrichtung zur Aufbereitung von Wasser;
Fig. 4 einen drehbaren Hohlkörper mit drei Separatoren in einer Vorderansicht;
Fig. 5 einen drehbaren Hohlkörper mit vier Separatoren in einer Vorderansicht;
Fig. 6 ein Ablaufdiagram für ein Verfahren.

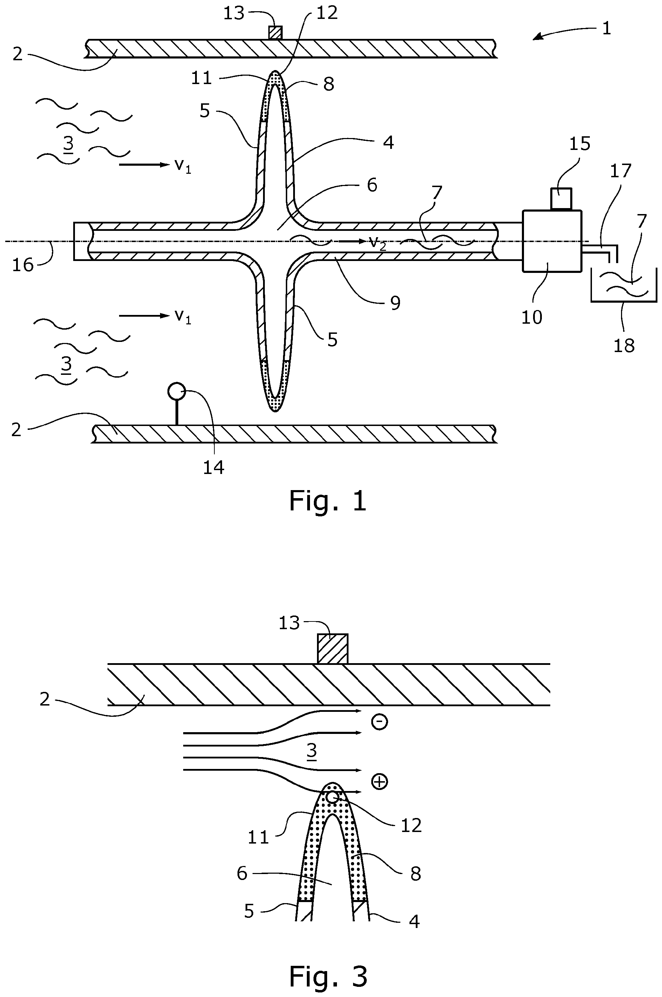

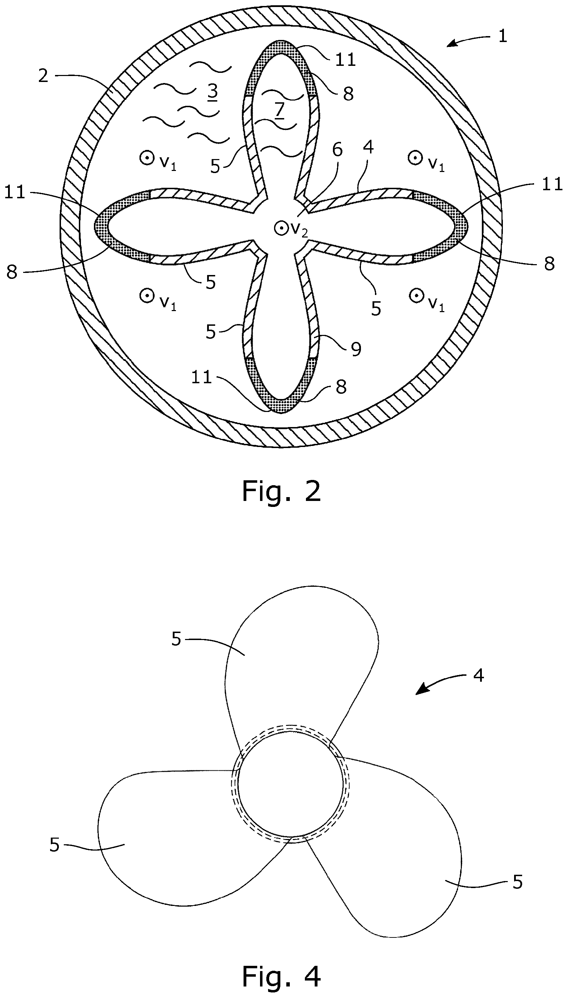

Fig. 1 und Fig. 2 zeigen schematisch eine Vorrichtung 1 zur Aufbereitung von Wasser mit einem äußeren Hohlkörper 2, durch den aufzubereitendes Wasser 3 geleitet werden kann, und einen im äußeren Hohlkörper 2 angeordneten und im aufzubereitenden Wasser 3 um eine Rotationsachse 16 drehbaren Hohlkör- per 4 mit zumindest einem schaufelförmigen Separator 5, hier vier Separatoren 5 (wie in Fig. 2 gezeigt). Die schaufelförmigen Separatoren 5 sind ebenfalls hohl und sind mit dem drehbaren Hohlkör- per 4 fest verbunden. Die schaufelförmigen Separatoren 5 und der drehbare Hohlkörper 4 schließen einen zusammenhängenden Hohlraum 6 zur Durchleitung von aufbereitetem Wasser 7 ein. D. h. die Separatoren 5 und der drehbare Hohlkörper 4 bilden einen einheitlichen Hohlkörper. An einem radial äußeren Ende 11 weist jeder Separator 5 eine wasserdampf- durchlässige Diffusionsschicht 8 auf.

Der drehbare Hohlkörper 4 weist ein geschlossenes Gehäuse 9 auf, das das aufbereitete Wasser 7 vom aufzubereitendem Wasser 3 trennt, damit beide Flüssigkeiten sich nicht vermischen können.

Wie in Fig. 1 gezeigt, ist das linke Ende des dreh- baren Hohlkörpers 4 verschlossen, damit das aufbereitete Wasser 7 nicht entweichen kann. Am rechten Ende des drehbaren Hohlkörpers 4 ist ein Antrieb 10 angebracht, der den drehbaren Hohlkörper 4 rotatorisch antreiben kann.

Die Diffusionsschicht 8 weist im Bereich des radialäußeren Endes 11 eines jeden Separators 5 ein porenförmiges Material auf. Das porenförmige Material kann aus einem Sinterwerkstoff hergestellt und / oder mit einer Legierung versehen sein, die katalytische Eigenschaften zur chemischen Reinigung des aufzubereitenden Wassers 3 aufweist. Die Größe der Poren kann teilweise im Nanometerbereich liegen. Die Poreneigenschaften des porenförmigen Materials bestimmen somit einen vordefinierten Separationsgrad.

Wie in Fig. 3 vergrößert dargestellt, ist am radial äußeren Ende 11 eines der Separatoren 5 eine erste Elektrode 12 angeordnet bzw. integriert. Neben dem in Fig. 3 gezeigten Separator 5 können auch die übrigen Separatoren 5 des drehbaren Hohlkörpers 4 eine Elektrode 12 aufweisen. Eine zweite Elektrode 13 ist auf der Außenwand des äußeren Hohlkörpers 2 angeordnet. Die erste Elektrode 12 ist negativ gepolt, die zweite Elektrode 13 positiv. Somit wird zwischen den beiden Elektroden 12 und 13 ein elektrisches Spannungsfeld aufgebaut. Die aufgeladenen Wassertröpfchen des aufzubereitenden Wassers 3 können dann entsprechend der Polarisierung der Ionen abgelenkt werden, so dass die positiv geladenen Ionen von der negativ geladenen Elektrode 12 angezogen werden. Die negativ geladenen Ionen werden zur positiv geladenen Elektrode 13 und damit zur Gegenseite gedrängt. Die positiv geladenen Wassertröpfchen fließen somit am Separator 5 vorbei.

Wie in Fig. 1 gezeigt, ist an der Innenwand des äußeren Hohlkörpers 2 zumindest ein Sensor 14 zur Erfassung eines Parameters des aufzubereitenden Wassers 3 befestigt. Der Sensor 14 kann zumindest die Geschwindigkeit und / oder den Druck des aufzubereitenden Wassers 3 bestimmen. Optional können die Temperatur des aufzubereitenden Wassers 3 erfasst und sich im aufzubereitenden Wasser 3 ausbreitende Schallwellen ausgewertet werden, wie z. B. die Lautstärke und die Tonhöhe.

Am Antrieb 10 ist ein Stellglied 15 angeordnet. Das Stellglied 15 kann die Sensorsignale des zumindest einen Sensors 14 auswerten und in Reaktion darauf die Rotationsgeschwindigkeit oder das Drehmoment des Antriebs 10 anpassen. Das Stellglied 15 kann in Form eines integrierten Schaltkreises oder eines Microcontrollers ausgebildet sein. Der Antrieb 10 ist hier als ein Elektromotor ausgeführt, wenn- gleich alternative Motortypen wie etwa ein Verbrennungsmotor möglich sind.

Am rechten Ende der Vorrichtung 1 ist ein Auslass 17 angeordnet, aus dem das aufbereitete Wasser 7 aus dem drehbaren Hohlkörper 4 in ein Sammelbecken
18 abfließen kann.

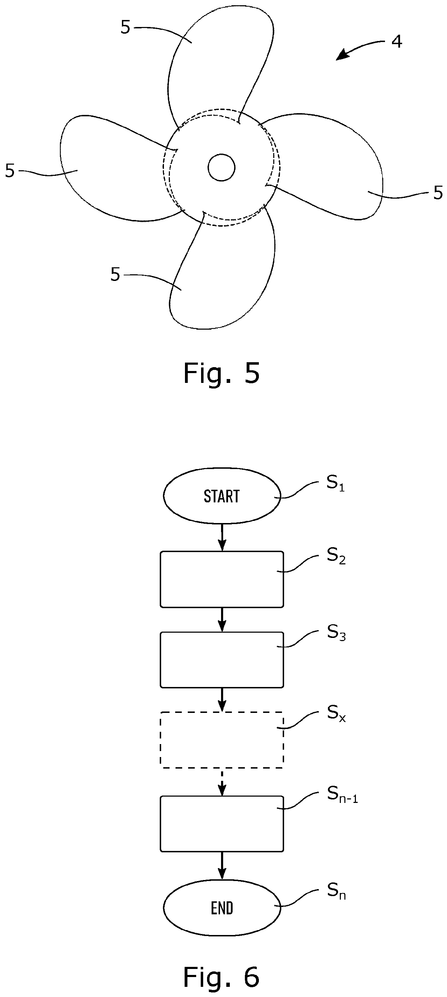

Fig. 4 zeigt beispielhaft einen drehbaren Hohlkör- per 4 mit drei Separatoren 5. Alternativ dazu zeigt Fig. 5 beispielhaft einen drehbaren Hohlkörper 4 mit vier Separatoren 5. Beide Varianten der drehbaren Hohlkörper 4 können in der Vorrichtung 1 eingesetzt werden. Alternativ kann ein drehbarer Hohlkörper 4 mit einer von drei oder vier abweichenden Anzahl von Separatoren verwendet werden. Die Geometrie der Separatoren 5 ist schaufelförmig und gleicht einem Propeller. Alternativ sind auch turbinenähnliche Schaufelgeometrien möglich.

Fig. 6 zeigt schematisch ein Ablaufdiagramm für ein Verfahren zur Aufbereitung von aufzubereitendem Wasser 3. Das Verfahren kann mit der zuvor dargestellten Vorrichtung 1 ausgeführt werden. Das Verfahren startet mit dem Schritt S1. Mit jedem weiteren Schritt erhöht sich der Index des jeweiligen Schrittes um 1. So folgt auf Schritt S1 der Schritt S2, dann folgt Schritt S3, usw., bis das Verfahren mit seinem letzten Schritt Sn endet. Der Index n entspricht dann der Gesamtzahl der Schritte.

Nachdem das Verfahren mit dem ersten Schritt gestartet wurde, beginnt als nächster Schritt der Antrieb 10 zu rotieren und treibt den drehbaren Hohlkörper 4 an, so dass sich dieser um die Rotationsachse 16 dreht. Die Drehgeschwindigkeit und das Drehmoment des Antriebs 10 werden von dem Stellglied 15 vorgegeben. Zugleich rotiert der zumindest eine mit dem drehbaren Hohlkörper 4 verbundene Separator 5 mit. Aufgrund der schaufelförmigen Geometrie des zumindest einen schaufelförmigen Separators 5 wird dadurch das sich im äußeren Hohlkörper 2 befindliche aufzubereitende Wasser 3 auf eine Fließgeschwindigkeit v1 beschleunigt, die hoch genug ist, dass sich im aufzubereitenden Wasser 3 Kavitationsblasen ausbilden können.

In einem weiteren Schritt wird die wasserdampf- durchlässige Diffusionsschicht 8 des zumindest einen schaufelförmigen Separators 5 vom aufzubereitendem Wasser 3 umspült. Der zumindest eine Separator 5 rotiert dabei im aufzubereitendem Wasser 3 bzw. wird in das aufzubereitende Wasser 3 eingetaucht. Infolge dessen fließt das aufzubereitende Wasser 3 am Separator 5 vorbei.

In einem weiteren optionalen Schritt wird zwischen der ersten Elektrode 12 und der zweiten Elektrode 13 ein elektrisches Spannungsfeld aufgebaut. Die erste Elektrode 12 wird negativ gepolt, die zweite Elektrode 13 positiv. Durch die Rotation des zumindest einen Separators 5 wird das aufzubereitende Wasser 3 durch das elektrische Spannungsfeld geleitet bzw. aufgrund einer sich einstellenden Sogwirkung durch das elektrische Spannungsfeld gezogen. Daraufhin erfolgt eine elektrolytische Separation des aufzubereitenden Wassers 3, bei der die positiv geladenen Ionen des aufzubereitenden Wassers 3 zum Separator 5 hingezogen werden, und die negativ geladenen Ionen des aufzubereitenden Wassers 3 zur positiv geladenen Elektrode 13 am äußeren Hohlkörper 2, wie auch in Fig. 3 gezeigt.

In einem weiteren optionalen Schritt wird die Rotationsgeschwindigkeit des drehbaren Hohlkörpers 4 bestimmt. Dieser Schritt dient der Kontrolle, dass die Fließgeschwindigkeit des aufzubereitenden Wassers 3 hoch genug bleibt (also größer gleich v1), so dass sich Kavitationsblasen im aufzubereitenden Wasser 3 bilden können. Fällt die Fließgeschwindigkeit des aufzubereitenden Wassers 3 unter einen Grenzwert, wird dieser Umstand vom Sensor 14 erkannt und das Stellglied 15 erhöht die Rotationsgeschwindigkeit des drehbaren Hohlkörpers 4 durch Beschleunigen des Antriebs 10 automatisch auf einen passenden Wert. Das Stellglied 15 kann zur Einstellung der Rotationsgeschwindigkeit des drehbaren Hohlkörpers 4 weitere Parameter des aufzubereiten- den Wassers 3 berücksichtigen, wie etwa Druck, Temperatur und Schallwellen.

Folglich werden in einem weiteren Schritt Kavitationsblasen im aufzubereitenden Wasser 3 gebildet. Die an dem zumindest einen Separator 5 befindlichen Dampfblasen diffundieren durch die wasserdampf- durchlässige Diffusionsschicht 8 bzw. werden aufgrund der hohen Drücke, die durch die Kavitation entstehen, durch die Diffusionsschicht 8 gedrückt. D. h. aus dem aufzubereitenden Wasser 3 erzeugter Wasserdampf passiert die Diffusionsschicht 8 des Separators 5.

In einem weiteren Schritt wird der durch die Diffusionsschicht diffundierte Wasserdampf im drehbaren Hohlkörper 4 gesammelt.

Durch Ausbilden eines Partialdampfdruckgefälles im drehbaren Hohlkörper 4 wird verhindert, dass Wasserdampf aus dem drehbaren Hohlkörper 4 entweicht.

In einem weiteren Schritt wird der im drehbaren Hohlkörper 4 befindliche Wasserdampf zu aufbereitetem Wasser 7 kondensiert. Somit wird aus dem aufzubereitenden Wasser 3 sauberes Wasser gewonnen.

In einem weiteren Schritt wird das aufbereitete Wasser 7 mit einer Fließgeschwindigkeit v2 aus dem drehbaren Hohlkörper 4 abgeführt. D. h. der drehbare Hohlkörper 4 mit seinem zumindest einen schaufelförmigen Separator 5 dient der Förderung des aufzubereitenden Wassers 3 und des aufbereiteten Wassers 7 gleichermaßen.

In einem weiteren Schritt kann das aufbereitete Wasser 7 aus dem Auslass 17 ausgelassen und im Sammelbecken 18 aufgefangen werden.

Die Schritte des zuvor erläuterten Verfahrens können in der angegeben Reihenfolge ausgeführt werden. Abweichend davon kann die Reihenfolge von einemoder mehreren Schritten vertauscht werden oder es können ein oder mehrere Schritte entfallen.

### Bezugszeichen

| | |
|---|---|
| 1 | Vorrichtung |
| 2 | Äußerer Hohlkörper |
| 3 | Aufzubereitendes Wasser |
| 4 | Drehbarer Hohlkörper |
| 5 | Separator |
| 6 | Hohlraum |
| 7 | Aufbereitetes Wasser |
| 8 | Diffusionsschicht |
| 9 | Gehäuse |
| 10 | Antrieb |
| 11 | Radial äußeres Ende |
| 12 | Erste Elektrode |
| 13 | Zweite Elektrode |
| 14 | Sensor |
| 15 | Stellglied |
| 16 | Rotationsachse |
| 17 | Auslass |
| 18 | Sammelbecken |

## Patentansprüche

1. Vorrichtung (1) zur Aufbereitung von Wasser, mit einem in aufzubereitendem Wasser (3) drehbaren Hohlkörper (4), wobei der drehbare Hohlkörper (4) zumindest einen schaufelförmigen Separator (5) umfasst, der zumindest teilweise eine wasserdampfdurchlässige Diffusionsschicht (8) aufweist und mit dem drehbaren Hohlkörper (4) einen zusammenhängenden Hohlraum (6) zur Durchleitung von aufbereitetem Wasser (7) umschließt, wobei der drehbare Hohlkörper (4) als Auffangbehälter für das aufbereitete Wasser (7) dient, das durch Kondensation im drehbaren Hohlkörper (4) gewonnen wird, und wobei die Vorrichtung ferner einen mit dem drehbaren Hohlkörper (4) verbundenen Antrieb (10) zum Hervorrufen von Kavitation im aufzubereitenden Wasser (3) durch Rotation des Separators (5) aufweist, ***gekennzeichnet durch*** ein Stellglied (15) zur Förderung von Kavitation im aufzubereitenden Wasser (3), wobei bei Vorliegen einer Abweichung der Rotationsgeschwindigkeit oder des Drehmoments des drehbaren Hohlkörpers (4) von einem Sollwert das Stellglied (15) die Rotationsgeschwindigkeit oder das Drehmoment an einen jeweiligen Sollwert anpasst, wobei die Sollwerte auf einen Wert eingestellt sind, bei dem eine Kavitation im aufzubereitenden Wasser (3) zu erwarten ist.

2. Vorrichtung (1) nach Anspruch *1, **dadurch gekennzeichnet, dass*** der drehbare Hohlkörper (4) ein geschlossenes Gehäuse (9) zur Trennung des aufzubereitenden Wassers (3) von dem aufbereiteten Wasser (7) umfasst.

3. Vorrichtung (1) nach Anspruch 1 oder 2, ***gekennzeichnet durch*** einen äußeren Hohlkörper (2) zur Durchleitung des aufzubereitenden Wassers (3), wobei der drehbare Hohlkörper (4) innerhalb des äußeren Hohlkörpers (2) angeordnet ist.

4. Vorrichtung (1) nach einem der vorhergehenden Ansprüche, ***dadurch gekennzeichnet, dass*** der schaufelförmige Separator (5) zumindest eine Propellerschaufel oder Turbinenschaufel aufweist.

5. Vorrichtung (1) nach einem der vorhergehenden Ansprüche, ***dadurch gekennzeichnet, dass*** die zumindest teilweise wasserdampfdurchlässige Diffusionsschicht (8) an einem radial äußeren Ende (11) des schaufelförmigen Separators (5) angeordnet ist.

6. Vorrichtung (1) nach einem der vorhergehenden Ansprüche, ***dadurch gekennzeichnet, dass*** die zumindest teilweise wasserdampfdurchlässige Diffusionsschicht (8) zumindest teilweise ein porenförmiges Material aufweist.

7. Vorrichtung (1) nach Anspruch 6, ***dadurch gekennzeichnet, dass*** das porenförmige Material zumindest teilweise als Katalysator ausgebildet ist.

8. Vorrichtung (1) nach Anspruch 6 oder 7, ***dadurch gekennzeichnet, dass*** die Poreneigenschaften des porenförmigen Materials an einen vordefinierten Separationsgrad angepasst sind.

9. Vorrichtung (1) nach einem der vorhergehenden Ansprüche, ***dadurch gekennzeichnet, dass*** die zumindest teilweise wasserdampfdurchlässige Diffusionsschicht (8) zumindest teilweise aus einem Sinterwerkstoff hergestellt ist.

10. Vorrichtung (1) nach einem der vorhergehenden Ansprüche, ***dadurch gekennzeichnet, dass*** die Diffusionsschicht (8) ein Entweichen von Wasserdampf aus dem drehbaren Hohlkörper (4) verhindert.

11. Vorrichtung (1) nach Anspruch 6, ***dadurch gekennzeichnet, dass*** das zumindest teilweise porenförmige Material einen porösen Graphenschaum zur Erzeugung von elektrisch kontrollierbaren Druckluftschüben aufweist.

12. Vorrichtung (1) nach einem der vorhergehenden Ansprüche, ***gekennzeichnet durch*** zumindest eine Elektrode (12, 13) zum Aufbauen eines elektrischen Spannungsfeldes im aufzubereitenden Wasser (3).

13. Vorrichtung (1) nach Anspruch 11 in Verbindung mit Anspruch 3, ***dadurch gekennzeichnet, dass*** der Separator (5) eine erste Elektrode (12) umfasst und der äußere Hohlkörper (2) eine zweite Elektrode (13) umfasst.

14. Verfahren zur Aufbereitung von Wasser mit einer Vorrichtung nach einem der Ansprüche 1 bis 13 mit den Schritten: Rotatorisches Antreiben eines drehbaren Hohlkörpers (4) mit zumindest einem schaufelförmigen Separator (5), der zumindest teilweise eine wasserdampfdurchlässige Diffusionsschicht (8) aufweist, Umspülen der Diffusionsschicht (8) im aufzubereitenden Wasser (3), Erzeugen von Kavitation im aufzubereitenden Wasser (3) zur Bildung von durch die Diffusionsschicht (8) diffundierendem Wasserdampf, und Sammeln von Wasserdampf im drehbaren Hohlkörper (4), Kondensieren des Wasserdampfs im drehbaren Hohlkörper (4) zu aufbereitetem Wasser (7), Abführen des aufbereiteten Wassers (7), Anpassen der Rotationsgeschwindigkeit oder des Drehmoments des drehbaren Hohlkörpers (4) an einen jeweiligen Sollwert bei Vorliegen einer Abweichung der Rotationsgeschwindigkeit oder des Drehmoments von einem Sollwert, wobei die Sollwerte auf einen Wert eingestellt sind, bei dem eine Kavitation im aufzubereitenden Wasser (3) zu erwarten ist.

15. Verfahren nach Anspruch 14, ***gekennzeichnet durch*** Aufbauen eines elektrischen Spannungsfeldes im aufzubereitenden Wasser (3).

16. Verfahren nach einem der Ansprüche 14 oder 15, ***gekennzeichnet durch*** Bestimmen einer Rotationsgeschwindigkeit des drehbaren Hohlkörpers (4).

17. Verfahren nach einem der Ansprüche 14 bis 16, ***gekennzeichnet durch*** Ausbilden eines Partialdampfdruckgefälles im drehbaren Hohlkörper (4) zur Verhinderung eines Entweichens des Wasserdampfs aus dem drehbaren Hohlkörper (4).

## Claims

1. A device (1) for treating water with a hollow body (4) rotatable in water to be treated (3), wherein the rotatable hollow body (4) comprises at least one blade-shaped separator (5), which at least partially has a water vapour-permeable diffusion layer (8) and encloses together with the rotatable hollow body (4) a continuous hollow space (6) for the passage of treated water (7), wherein the rotatable hollow body (4) serves as a collection container for the treated water (7) which is obtained by condensation in the rotatable hollow body (4), and wherein the device further has a drive (10) connected to the rotatable hollow body (4) for causing cavitation in the water to be treated (3) by rotation of the separator (5), ***characterised by*** an actuator (15) for inducing cavitation in the water to be treated (3), wherein in case of a deviation of the rotational speed or the torque of the rotatable hollow body (4) from a desired value, the actuator (15) adjusts the rotational speed or the torque to a respective desired value, wherein the desired values are set to a value at which cavitation is to be expected in the water to be treated (3).

2. The device (1) according to claim *1, **characterised in that*** the rotatable hollow body (4) comprises a closed housing (9) for separating the water to be treated (3) from the treated water (7).

3. The device (1) according to claim 1 or 2, ***characterised by*** an outer hollow body (2) for the passage of the water to be treated (3), wherein the rotatable hollow body (4) is arranged inside the outer hollow body (2).

4. The device (1) according to one of the preceding claims, ***characterised in that*** the blade-shaped separator (5) has at least one propeller blade or turbine blade.

5. The device (1) according to one of the preceding claims, ***characterised in that*** the at least partially water vapour-permeable diffusion layer (8) is arranged at a radially outer end (11) of the blade-shaped separator (5).

6. The device (1) according to one of the preceding claims, ***characterised in that*** the at least partially water vapour-permeable diffusion layer (8) has at least partially a pore-shaped material.

7. The device (1) according to claim 6, ***characterised in that*** the pore-shaped material is at least partially designed as a catalyst.

8. The device (1) according to claim 6 or 7, ***characterised in that*** the properties of the pores of the pore-shaped material are adapted to a predefined degree of separation.

9. The device (1) according to one of the preceding claims, ***characterised in that*** the at least partially water vapour-permeable diffusion layer (8) is at least partially manufactured from a sintered material.

10. The device (1) according to one of the preceding claims, ***characterised in that*** the diffusion layer (8) prevents water vapour from escaping the rotatable hollow body (4).

11. The device (1) according to claim 6, ***characterised in that*** the at least partially pore-shaped material has a porous graphene foam for generating electrically controllable compressed air thrusts.

12. The device (1) according to one of the preceding claims, ***characterised by*** at least one electrode (12, 13) for building up an electrical tension field in the water to be treated (3).

13. The device (1) according to claim 11 in conjunction with claim 3, ***characterised in that*** the separator (5) comprises a first electrode (12) and the outer hollow body (2) comprises a second electrode (13).

14. A method for treating water with a device according to any one of claims 1 to 13 with the steps of: rotationally driving a rotatable hollow body (4) with at least one blade-shaped separator (5), which at least partially has a water vapour-permeable diffusion layer (8), flushing the water to be treated (3) around the diffusion layer (8), generating cavitation in the water to be treated (3) to form water vapour diffusing through the diffusion layer (8), and collecting water vapour in the rotatable hollow body (4), condensing the water vapour in the rotatable hollow body (4) to form treated water (7), discharging the treated water (7), adapting the rotational speed or the torque of the rotatable hollow body (4) to a respective desired value in case of a deviation of the rotational speed or the torque from a desired value, wherein the desired values are set to a value at which cavitation is to be expected in the water to be treated (3).

15. The method according to claim 14, ***characterised by*** building up an electrical tension field in the water to be treated (3).

16. The method according to one of the claims 14 or 15, ***characterised by*** determining a rotational speed of the rotatable hollow body (4).

17. The method according to one of the claims 14 to 16, ***characterised by*** forming a partial vapour pressure gradient in the rotatable hollow body (4) to prevent an escape of the water vapour from the rotatable hollow body (4).

## Revendications

1. Dispositif (1) pour le traitement de l'eau, avec un corps creux (4) apte à tourner dans de l'eau à traiter (3), où le corps creux rotatif (4) comprend au moins un séparateur (5) en forme de pale, qui comporte au moins partiellement une couche de diffusion (8) perméable à la vapeur d'eau et qui entoure avec le corps creux rotatif (4) un espace creux (6) d'un seul tenant pour le passage de l'eau traitée (7), où le corps creux rotatif (4) sert de réservoir collecteur pour l'eau traitée (7) qui est obtenue par condensation dans le corps creux rotatif (4), et où le dispositif comporte en outre un entraînement (10) relié au corps creux rotatif (4) pour provoquer une cavitation dans l'eau à traiter (3) par rotation du séparateur (5), ***caractérisé par*** un organe de réglage (15) pour favoriser la cavitation dans l'eau à traiter (3), où, en présence d'un écart de la vitesse de rotation ou du couple du corps creux rotatif (4) par rapport à une valeur prescrite, l'organe de réglage (15) adapte la vitesse de rotation ou le couple à une valeur prescrite respective, où les valeurs prescrites sont réglées sur une valeur pour laquelle une cavitation est à prévoir dans l'eau à traiter (3).

2. Dispositif (1) selon la revendication *1, **caractérisé en ce que*** le corps creux rotatif (4) comprend un boîtier fermé (9) pour la séparation de l'eau à traiter (3) de l'eau traitée (7).

3. Dispositif (1) selon la revendication 1 ou 2, ***caractérisé par*** un corps creux extérieur (2) pour le passage de l'eau à traiter (3), où le corps creux rotatif (4) est disposé à l'intérieur du corps creux extérieur (2).

4. Dispositif (1) selon l'une des revendications précédentes, ***caractérisé en ce que*** le séparateur (5) en forme de pale comporte au moins une pale d'hélice ou une pale de turbine.

5. Dispositif (1) selon l'une des revendications précédentes, ***caractérisé en ce que*** la couche de diffusion (8) au moins partiellement perméable à la vapeur d'eau est disposée à une extrémité radialement extérieure (11) du séparateur (5) en forme de pale.

6. Dispositif (1) selon l'une des revendications précédentes, ***caractérisé en ce que*** la couche de diffusion (8) au moins partiellement perméable à la vapeur d'eau comporte au moins partiellement un matériau en forme de pores.

7. Dispositif (1) selon la revendication 6, ***caractérisé en ce que*** le matériau en forme de pores est au moins partiellement réalisé sous forme de catalyseur.

8. Dispositif (1) selon la revendication 6 ou 7, ***caractérisé en ce que*** les propriétés des pores du matériau en forme de pores sont adaptées à un degré de séparation prédéfini.

9. Dispositif (1) selon l'une des revendications précédentes, ***caractérisé en ce que*** la couche de diffusion (8) au moins partiellement perméable à la vapeur d'eau est au moins partiellement fabriquée à partir d'un matériau fritté.

10. Dispositif (1) selon l'une des revendications précédentes, ***caractérisé en ce que*** la couche de diffusion (8) empêche une fuite de vapeur d'eau en dehors du corps creux rotatif (4).

11. Dispositif (1) selon la revendication 6, ***caractérisé en ce que*** le matériau au moins partiellement en forme de pores comporte une mousse de graphène poreuse pour la génération de poussées d'air comprimé électriquement contrôlables.

12. Dispositif (1) selon l'une des revendications précédentes, ***caractérisé par*** au moins une électrode (12, 13) pour la mise en place d'un champ de tension électrique dans l'eau (3) à traiter.

13. Dispositif (1) selon la revendication 11 en combinaison avec la revendication 3, ***caractérisé en ce que*** le séparateur (5) comprend une première électrode (12) et le corps creux externe (2) comprend une deuxième électrode (13).

14. Procédé de traitement de l'eau avec un dispositif selon l'une des revendications 1 à 13 avec les étapes suivantes : Entraînement en rotation d'un corps creux rotatif (4) avec au moins un séparateur (5) en forme de pale, qui comporte au moins partiellement une couche de diffusion (8) perméable à la vapeur d'eau, Baignage de la couche de diffusion (8) dans l'eau à traiter (3), Génération d'une cavitation dans l'eau à traiter (3) pour former de la vapeur d'eau diffusant à travers la couche de diffusion (8), et Collecte de la vapeur d'eau dans le corps creux rotatif (4), Condensation de la vapeur d'eau dans le corps creux rotatif (4) pour obtenir de l'eau traitée (7), Évacuation de l'eau traitée (7), Adaptation de la vitesse de rotation ou du couple du corps creux rotatif (4) à une valeur prescrite respective en présence d'un écart de la vitesse de rotation ou du couple par rapport à une valeur prescrite, où les valeurs prescrites sont réglées sur une valeur pour laquelle une cavitation est à prévoir dans l'eau à traiter (3).

15. Procédé selon la revendication 14, ***caractérisé par*** la mise en place d'un champ de tension électrique dans l'eau (3) à traiter.

16. Procédé selon l'une quelconque des revendications 14 ou 15, ***caractérisé par*** la détermination d'une vitesse de rotation du corps creux rotatif (4).

17. Procédé selon l'une quelconque des revendications 14 à 16, ***caractérisé par*** la formation d'un gradient partiel de pression de vapeur dans le corps creux rotatif (4) afin d'empêcher une fuite de la vapeur d'eau en dehors du corps creux rotatif (4).
